# EUROPEAN PATENT APPLICATION

(11) **EP 4 020 359 A1**
(43) Date of publication of application: **29.06.2022**
(21) Application number: 21197965.3
(22) Date of filing: 21.09.2021
(51) Int. Cl.: G06Q 20/14, G06Q 20/06, G07F 15/00, G06Q 20/30, G06Q 20/08, G06Q 20/16, G06Q 20/22, G06Q 20/32, G06Q 20/36

(54) **MICRO PAYMENTS IN A MOBILITY-AS-A-SERVICE NETWORK**

(30) Priority: 23.12.2020 US 202017132137
(71) Applicant: Intel Corporation, Santa Clara, CA 95054 (US)
(72) Inventor: SMITH, Ned M., Beaverton, 97006 (US); JHA, Satish, Portland, 97229 (US); SHARMA BANJADE, Vesh Raj, Portland, 97229 (US); ALVAREZ, Ignacio J., Portland, 97229 (US); ALAM, S M Iftekharul, Hillsboro, 97124 (US)
(74) Representative: Viering, Jentschura & Partner mbB Patent- und Rechtsanwälte

(57) **Abstract**

Systems and techniques for micro payments in a mobility-as-a-service (MaaS) network are described herein. A mobility task may be received for execution by a MaaS node of the MaaS network. An electronic contract may be established with a requestor of the task. A payment transaction may be initiated based on the mobility task and the electronic contract. The mobility task may be submitted for execution by the MaaS node using resources of the MaaS node. An amount of the payment may be transferred from an electronic account of the requestor to an electronic account of the MaaS node.

## Description

### TECHNICAL FIELD

Embodiments described herein generally relate to mobility-as-a-service networks and, in some embodiments, more specifically to micropayments in a mobility-as-a-service network.

### BACKGROUND

Mobility-as-a-service (Maas) nodes may provide a variety of connectivity functions to tenants within a mobility-as-a-service network. Performing the variety of functions uses resources of the node and the network. MaaS operators may seek compensation for providing functions to the tenants. Performing an individual function may use a small set of resources, but in the aggregate, the services provided by a MaaS node and MaaS network may require a large overarching set of resources to be maintained. The functions may be spread across a large corpus of tenants and operators may wish to allocate costs of operating the MaaS nodes and MaaS network according to utilization by individual tenants.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates an example of a mobility-as-a-service aware platform for micro payments in a mobility-as-a-service network, according to an embodiment.
FIG. 2 illustrates an example of a Mobility-as-a-Service node architecture for micro payments in a mobility-as-a-service network, according to an embodiment.
FIG. 3 illustrates an example of a Mobility-as-a-Service micro payment clearing network for micro payments in a mobility-as-a-service network, according to an embodiment.
FIG. 4 illustrates an example of a charging station in a platform for micro payments in a mobility-as-a-service network, according to an embodiment.
FIG. 5 illustrates an example of a Mobility-as-a-Service drone delivery and payment in a platform for micro payments in a mobility-as-a-service network, according to an embodiment.
FIG. 6 illustrates a flow diagram of an example of a method for micro payments in a mobility-as-a-service network, according to an embodiment.
FIG. 7 is a block diagram illustrating an example of a machine upon which one or more embodiments may be implemented.

### DETAILED DESCRIPTION

Mobility-as-a-Service (MaaS) nodes provide connectivity to MaaS services, other MaaS Nodes, edge / internet of things (IoT) services, orchestration, and command-n-control applications. MaaS nodes may also have local sensors, storage, compute, and accelerated compute capabilities. However, MaaS nodes do not provide a way to seamlessly integrate micro-payments for efficient decentralized pay-per-use/pay-per-view use cases. A micro-payment pay-per-use scenario differs from traditional pay-per-use use case. Micro-payments compensate for only the unit of work that is performed. Different tenants on the same MaaS node pay for the unit of work (UoW) attributed to each specific tenant. UoW is a normalized approach to partitioning resources. It is not a scheme for pricing / valuing resources. E-wallets or electronic contracts may provide proof that a tenant has the ability to pay for the scheduled unit of work. Execution of a UoW may be contingent on receipt of payment or proof of ability to pay. Micro-payment clearing may be done using e-tokens and distributed ledger technology (DLT). The DLT clearing house may be decentralized.

The systems and techniques discussed herein solves the problem with traditional MaaS node compensation that depends on an external payment infrastructure that may be problematic. For example, in rural and underdeveloped geographies, automation of payment is nascent. Additionally, in occasionally connected scenarios including times of critical infrastructure breakdown, network connectivity out-of-reach, etc., external payment infrastructures may not be available.

Billing is another challenge in traditional MaaS node compensation. Resource utilization instrumentation and accounting is preferable at the granularity of the workload, task, or function that executes. UoW resource utilization metering allows micro-billing that corresponds to a UoW granularity for micro-payment. Current MaaS Nodes are not capable of metering resource utilization at UoW granularity.

Previous solutions involve a user supplying a traditional form of payment (e.g., cash, credit card, check, PayPal, Vimeo, DLT token - aka Bitcoin, etc.). The user may subscribe to a service provider where a subscription authorizes access to a variety of MaaS services. The user may pay for service through taxation in exchange for public access to MaaS services.

MaaS micro-payment technology extends MaaS node architectures to include support for micropayments for a UoW that is specific to the execution capability and hosting slice resources (e.g., resources that may be allocated in small segments, etc.). Micro-payments allow direct purchase of resources needed to perform a MaaS workload. For example, power from a smart-cities grid may be a pay for item in MaaS workload increments.

Pay-per-use in conventional payment methods negatively impacts user experience because the experience is interrupted in order to complete payment processing steps. This becomes increasingly intrusive as the number of MaaS interactions increases-each requiring payment.

Conventional subscription payment methods introduce an intermediary into the MaaS ecosystem which determines the value of discrete services and the frequency with which the services may be used. This stifles innovation among MaaS suppliers if the wrong set of ecosystem suppliers are compensated while the ones best suited to improve the user experience are starved. Determining value that each supplier / MaaS component brings is political rather than merit based.

A conventional subscription-based payment system may stifle MaaS innovation by misappropriating value assignment. Users and MaaS service providers may be separated by a central entity such as a network carrier or cloud service provider who normally pre-determines and distributes value within the services value chain. Taxation is often applied to the SLA contract that is typically managed by the central figure in the value chain. By integrating micro-payment and micro-billing capabilities in the compute fabric, every point in the value chain is an opportunity for the entity that provides value to extract payment in exchange for the particular value provided. Additionally, this is also a reasonable point to collect tax on the value provided.

The systems and techniques discussed herein augment the MaaS node architecture with micro-payment and micro-billing capabilities that operate at UoW granularity. This includes micro-billing resource metering applied to power utilization, CPU/xPU utilization as well as memory, storage, and communication resources. In some cases, variable UoW may be determine if only time of use or distance is relevant (e.g., parking, using last mile animal/donkey-ride, etc.). The resources utilized are managed by a micro-billing agent. MaaS nodes are further integrated with task scheduler/manager capabilities such that operations performed on the node may be multi-tenant scheduled at UoW granularity. Furthermore, a micro-payment manager may directly compensate for micro-billings. Additionally, external entities that support / service the MaaS node (e.g., energy providers, etc.) may be down-stream compensated by the micro-payment manager using e-tokens. E-tokens and cryptographic keys are protected using e-wallet technology (e.g., enclaves, hardware security modules (HSMs), roots-of-trust, etc.). MaaS nodes with micro-billing and micro-payment capabilities may be discovered by other MaaS nodes using attestation of the MaaS node. MaaS infrastructure may include directory or Named Data Networking (NDN) services that introspect connected MaaS nodes and publish details about node capabilities.

This solution may be referred to as MaaS Micro-Payment Technology (MPT) that extends the reach of traditional payment infrastructures-addresses the gap in first/last mile for payment that is filled by MaaS infrastructure. MPT allows direct compensation for MaaS tasks, functions, workloads from within the MaaS infrastructure enabling those who pioneer build-out of MaaS infrastructure to be able to immediately receive compensation. Cost of MaaS infrastructure build-out is rewarded according to the real value that it brings. Different MaaS geographies have different economics due to remoteness, demographics, market need, etc. and direct compensation removes dependence on a separate value chain / payment infrastructure. A MaaS supply chain may reward the best available suppliers of energy, hosting, maintenance, etc. based on the best innovative approach rather than political clout.

MaaS ecosystems may be increasingly for-hire businesses, but payment may be tied to subscription payment models that requires a central entity to manage customer subscription relationships and to pay the service supply chain. This places restrictions on how the service supply chain gets paid and often rewards the wrong service providers in terms of the end-user value they bring.

The MaaS MPT framework, discussed herein, for exchanging value for power/resource where value may be in the form of digital currency or for information assets and e-contracts allows more direct exchange interactions that circumvent complex value chains where a central entity determines the value of the various entities in the value exchange based on political clout, marketing influence, or other factors that may not directly relate to the value that is supplied at the point of asset exchange.

The MaaS MPT provides an online marketplace-based framework in which the owners of MaaS-aware resources and services may rent-out their facility to earn monetary rewards. This framework opens-up new possibilities for efficiently managing overhead MaaS operational costs by allowing direct payment for MaaS services. For example, an electric vehicle (EV) may have received application-based compensation from ridesharing in e-currency rather than converting Ether to Euros and the charging facility may only accept payment in MaaS blockchain tokens such as Stable-coin.

The MaaS MPT integrates micro-payment capabilities that may be the only payment infrastructure in rural economies (e.g., e-rickshaw and other forms of non-traditional transportation). MaaS MPT may address the problem of recovering currency conversion loss by exchanging in a variety of e-tokens. This may include information bartering using data assets. E-contracts may facilitate the exchange of assets.

Downstream suppliers such as an energy provider, MaaS node hosting providers, service providers, and repair service providers may receive payment from the MaaS nodes with MPT directly. Instrumenting MaaS-enabled hardware and software with MPT ensures each supplier in the MaaS ecosystem is capable of directly receiving compensation for service value it provides.

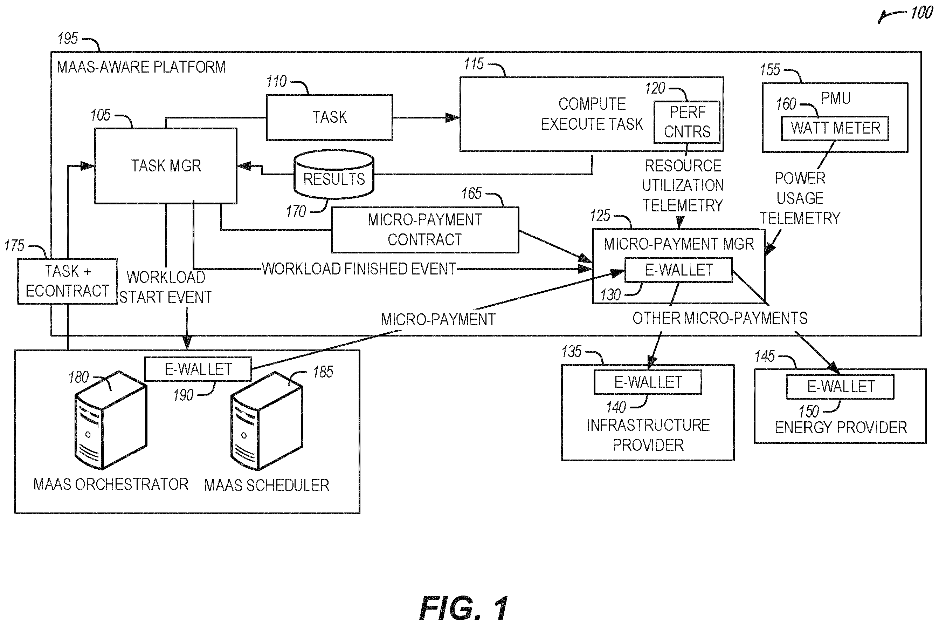

FIG. 1 illustrates an example of a mobility-as-a-service aware platform 100 for micro payments in a mobility-as-a-service network, according to an embodiment. A MaaS node 195 with MPT is shown in FIG. 1.

A task manager 105 works with a micro payment manager 125 to coordinate receipt of a micro payment before tasks 110 execute. Once a micro-payment contract 165 is in place, resource utilization and telemetry based on data from performance counters 120, power usage based on data from a watt meter 160, etc. charge against the micro-payment contract 165. Other parts of the MaaS ecosystem may receive micro-payments too such as an energy provider 145 and infrastructure providers 135.

The MaaS node 195 accepts micro-payment / tokenized currency as a form of payment and may refuse service / processing until fair payment terms are agreed to. Payment terms are normally addressed using a Service Level Agreement (SLA). However, if there are multiple steps to negotiating terms an e-contract may be employed instead or in addition. The e-contract may be part of the micro-payment contract 165. Access to e-wallets 130, 140, 150, and 190 for processing micro-payments and negotiating contracts facilitates integration of micro-payment technology into the MaaS node 195. MaaS architecture integrates the e-wallets 130, 140, 150, and 190 and micro-payment management with MaaS infrastructure, message exchange, etc. MaaS sensor networks, telemetry, and analytics may help drive fair pricing for MaaS services that are offered. Additionally, software defined hardware (SDHW) may be used to control (e.g., limit, etc.) the resources available for hire vs. always available to handle emergency or safety critical circumstances.

A MaaS orchestrator 180 and a MaaS scheduler 185 work in conjunction to schedule tasks 110 on compute resources 115 using the task manager 105. An e-contract for a task 110 identifies micro-payment options and e-wallets that will handle micro-payment debits and credits. The task 110 and e-contract are combined into an input 175 for the task manager 105. The task manager 105 notifies the micro-payment manager 125 regarding terms of task 110 execution and payment.

The task manager 105 notifies the MaaS orchestrator 180 when it is ready to complete the micro-payment for the task 110 and execution of the task 110 using the compute resources 115. The MaaS orchestrator 180 provides access to the e-wallet 190 to guarantee payment.

Compute resources 115 and other resources are allocated to the task 110. The workload may require acceleration (e.g., via field programmable gate array (FPGA), graphics processing unit (GPU), and other specialized processors) or protection (e.g., via trusted execution environment (TEE), etc.). If so, the workload planning / MaaS scheduler 185 will ensure the proper set of resources are allocated.

The task 110 is submitted to the compute resources 115 for execution. The performance counters 120 (e.g., telemetry counters, computing resource counters, etc.) measure computing resources used while the watt meter 160 measures power usage. Accounting statistics are made available to the micro-payment manager 125.

Task results 170 are returned to the MaaS orchestrator 180 via the task manager 105 and notifies micro-payment manager 125 of task 110 completion. The micro-payment manager 125 completes a micro-payment transaction for the task 110 (or for a workload including the task 110) from an e-wallet 190 of the MaaS orchestrator 180.

Other MaaS infrastructure entities such as the infrastructure providers 135 and energy provider 145 may receive downstream micro-payments for services and resources supplied to receive micro-payment as a share of micro-payment that e-wallet 130 receives.

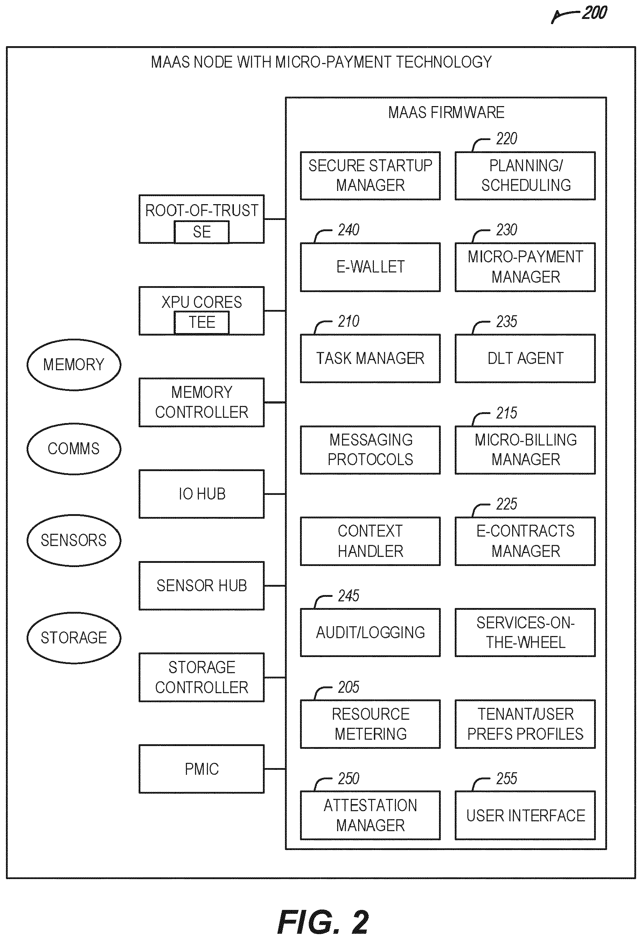

Each step of the process can be audited / logged via an Audit Manager (shown later in FIG. 2). If fault-tolerant execution is needed, the MaaS node 195 may be configured to run the workload instance twice using distinct sets of resources. The micro-payment manager 125 will observe that additional resources were consumed via the bill from a micro-billing manager of the micro-payment manager 125.

In some use cases, advertisers might offer discounts in the form of paid for resources in exchange for a user consuming an ad. A tenant/user profile preference module may provide ad targeting information and may facilitate receipt and presentation of ads to the user. The advertiser might supply an e-contract that agrees to pay e-tokens in exchange for the user consuming the ad. The e-tokens are deposited into an e-wallet of the user. When an e-bill is presented the micro-payment manager 125 may use the local e-wallet of the user to pay the e-bill. Because there is an e-token used, the e-contract does not need to describe payment in the form of the workload execution. This helps avoid what would otherwise be a complex 3-way transaction. The micro-payment manager 125 may also be used to collect taxes where the tax rate is included in the micro-payment contract 165. A suitable e-wallet may be identified to receive the tax transaction such as a government tax collection agency hosted service. The tax collection micro-payment functions similarly to that of the infrastructure providers 135 and the energy provider 145 as a cost of providing the service in the task 110.

FIG. 2 illustrates an example of a Mobility-as-a-Service node 200 architecture for micro payments in a mobility-as-a-service network, according to an embodiment. FIG. 2 may provide features as described in FIG. 1.

A MaaS node 200 with micro-payment technology (MPT) is shown in FIG. 2. The MaaS node 200 is instrumented with metering technology that senses the amount of resources used. A resource metering module 205 receives instructions from a task manager module 210 related to the tenant task/workloads, task context switch so that metered resources may be segmented according to a Unit of Work (UoW) designation. The task manager module 210 may receive a task to be executed by the MaaS node 200 of the MaaS network.

A micro-billing manager module 215 correlates the metered resources with tenant tasks and obtains service contract terms either from a planning/scheduler/orchestrator module 220 or from an e-contract (provided by an e-contracts manager module 225). The micro-billing manager module 215 may establish the e-contract with a requestor (e.g., a user, a tenant, etc.) of the task. In an example, the e-contract may include micro-payment options and the e-wallet of the requestor. In an example, resource utilization and performance metrics may be analyzed to set a target micro-payment rate for resources of the MaaS node 200. An e-contract proposal may be received from the requestor. It may be calculated that the e-contract terms are insufficient to meet the target micro-payment rate. An e-contract negotiation exchange may be initiated between the MaaS node 200 and the requestor and the e-contract may be established based on the results of the negotiation exchange.

The micro-billing manager module 215 presents a bill for resources used to execute the tenant/user workload to a micro-payment manager module 230. In an example, telemetry data, analytical data, and sensor data may be obtained for execution of the task from the MaaS node 200 and the micro-payment amount may be calculated using the telemetry data, analytical data, and sensor data. In an example, the sensor data may include power consumption data. The micro-payment manager module 230 accesses an e-wallet of the tenant to pay the bill. The micro-payment manager module 230 may initiate a micro-payment transaction based on the task and the e-contract. In an example, the task may be a member of a workload and the micro-payment amount may include an amount that corresponds to the resources used to complete the workload by the Maas node 200.

The planning/scheduler/orchestrator module 220 may submit the task for execution using resources of the MaaS node 200. In an example, the resource may be a power charging station. In another example, the resource may be a package delivery drone. In an example, the planning/scheduler/orchestrator module 220 may calculate available resources of the MaaS node 200. A subset of the available resources dedicated to critical workloads may be determined and the resources of the MaaS node 200 that are available for processing the task may be limited using software-defined hardware.

The micro-payment manager module 230 may transfer the micro-payment amount from an e-wallet of the requestor to e-wallet 240 of the MaaS node 200. In an example, the micro-payment transaction may be submitted for processing by a micro-payment clearing service. In an example, the micro-payment may be facilitated using distributed ledger technology. In another example, the micro-payment may be facilitated using a blockchain. This may require use of a distributed ledger technology (DLT) agent module 235 to clear the transaction on a blockchain/DLT. If the tenant's e-wallet is remote, then an e-contract is used to perform the appropriate 2-phase/3-phase commit protocol. The funds may be transferred to the e-wallet 240. The micro-payment manager module 230 may cache transactions locally if connectivity to the clearing network isn't available (e.g., using an auditor/logging module 245). Audit logs record that workload tasks have executed. The auditor/logging module 245 may check the DLT clearing network to verify the payment was processed for work that was done. If the transactions do not clear and the local cache is corrupted, then the auditor/logging module 245 may authorize re-starting the payment clearing process.

In an example, a portion of a third-party infrastructure expense may be calculated that is attributable to the task. The micro-payment may be apportioned among the MaaS node 200 and the third-party infrastructure expense and a portion of the micro-payment may be transferred to an e-wallet of an infrastructure provider corresponding to the third-party infrastructure expense.

As a precondition of running the user/tenant workload, the planning/scheduler/orchestrator module 220 may require attestation. The attestation manager 250 collects the attestation evidence from the various parts of the system that will be used to execute the workload. Evidence is forwarded to the planning/scheduler/orchestrator module 220 or to a remote orchestrator. Additionally, the user may wish to see a report of the internal state of the MaaS node 200 via a user interface 255. In an example, an attestation request may be received that corresponds to the task. Attestation evidence may be collected from the resources of the MaaS node 200 and the task may be scheduled for execution using the resources of the MaaS node 200 upon validation of the attestation evidence. A more sophisticated orchestrator may include a policy that identifies the attestation checks that must pass before the workload may proceed. The policy may be accompanied by a service level agreement that authorizes higher payment if higher levels of security can be guaranteed.

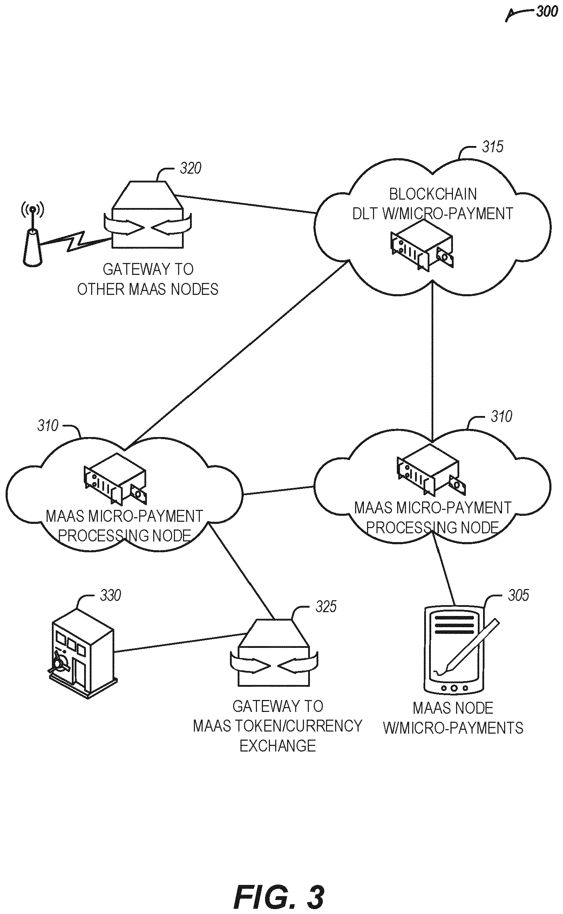

FIG. 3 illustrates an example of a Mobility-as-a-Service (MaaS) micro-payment clearing network 300 for micro payments in a mobility-as-a-service network, according to an embodiment. FIG. 3 may provide features as described in FIGS. 1 and 2.

MaaS Nodes are connected to a MaaS payment processing network that may use blockchain / DLT to clear micro-payment transactions. In Blockchains and DLT, the cost of achieving consensus and committing transactions to a ledger involves compensation. Unlike traditional blockchains (e.g., Bitcoin, Ethereum, etc.), the cost of transaction clearing need not be paid through mining but instead may be paid through e-wallet exchange. The miner nodes simply require an e-contract that authorizes them to clear a number of transactions in exchange for micro-payments to their e-wallet. If the MaaS ecosystem is funded initially through capital investment sources, the MaaS system may grow with additional capital investments. This approach allows the MaaS ecosystem to grow in accordance with the real value (or perceived real value) based on the amount of real dollars contributed. If there is speculative value associated with MaaS growth it is pre-assessed by venture capital sources, not as speculation on the token itself.

MaaS micro-payment infrastructure uses a DLT (blockchain) to perform micro-transactions for MaaS Services that may extend to the last/first mile. Micro-transactions are cleared using the MaaS micro-payment infrastructure that may be implemented both on MaaS nodes directly (e.g., MaaS node with micro-payments 305, etc.) or on Edge/Cloud hosting services (e.g., MaaS micro-payment processing nodes 310, Blockchain DLT with micro-payment 315, other MaaS nodes connected via a gateway 320, etc.). The MaaS micro-payment clearing network 300 has a gateway 325 to traditional banks and capital sources 330. The infusion of tokens allows the MaaS infrastructure to operate. The MaaS nodes 310 may be gifted tokens into its respective e-wallet in order to authorize payment for resources required to process a MaaS workload. Subsequent payments for MaaS services rendered serve to replenish the e-wallet such that subsequent gifting is not necessary. If the cost of operation is higher than the proceeds collected, then the price of the MaaS service is raised, or the MaaS node is replaced with a less expensive to operate successor.

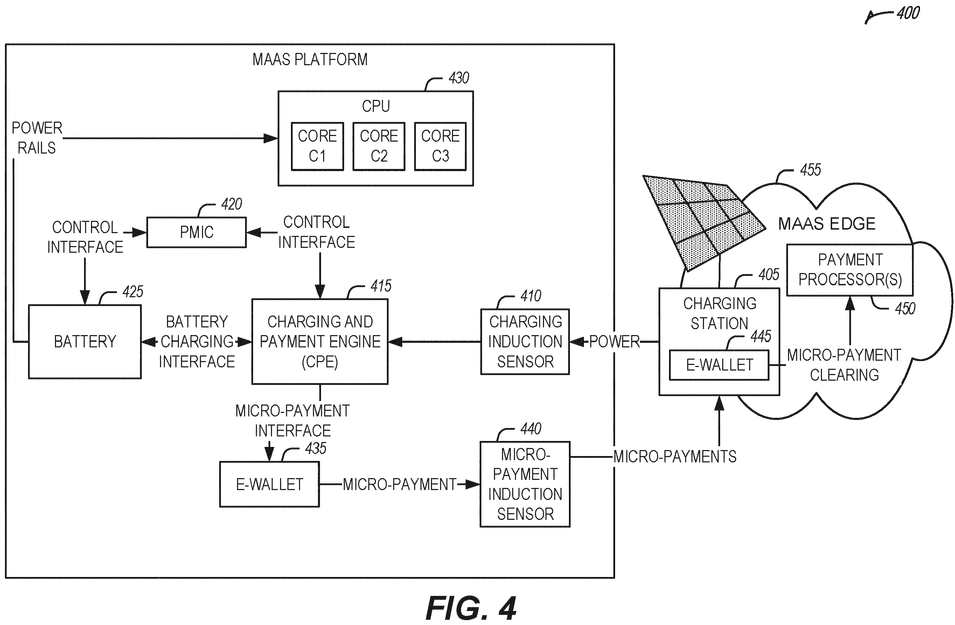

FIG. 4 illustrates an example of a charging station in a platform 400 for micro payments in a mobility-as-a-service network, according to an embodiment. FIG. 4 may provide features as described in FIGS. 1 to 3.

The MaaS micro-payment-capable platform 400 is equipped with easy connect micro-payment and charging interfaces such as induction coils under control of a power management integrated circuit 420 where a charging station 405 may supply power (e.g., to recharge a battery, etc.) and, as a condition of charging, receive micro-payments. The platform 400 uses a charging and payment engine (CPE) 415 to meter the current received and to allocate micro-payment tokens in e-wallet 435 to an e-wallet 445 of the charging station. Payment processors 450 in the MaaS Edge 455 may provide clearing services for the e-currency such as Blockchain, PayPal, etc.

Many MaaS devices are un-tethered and operate on battery 425 or other mobile fuel-cell technology that needs periodic re-charging/re-fueling to operate a processor 430. A simple interface is helpful for connecting the micro-payment exchange that works with charging/refueling interfaces.

An integrated micro-payment induction coil sensor 440 interface with battery 425 charging induction coil sensor 410 is used so that as watts flow to the battery 425, micro-payments flow from the e-wallet 435 to the charging source (e.g., the e-wallet 445 of the charging station 405, etc.). Other charging sources such as universal serial bus (USB), high-definition multimedia interface (HDMI), Ethernet, etc. may be repurposed to support micro-payment flow in the opposite direction as recharging current flow.

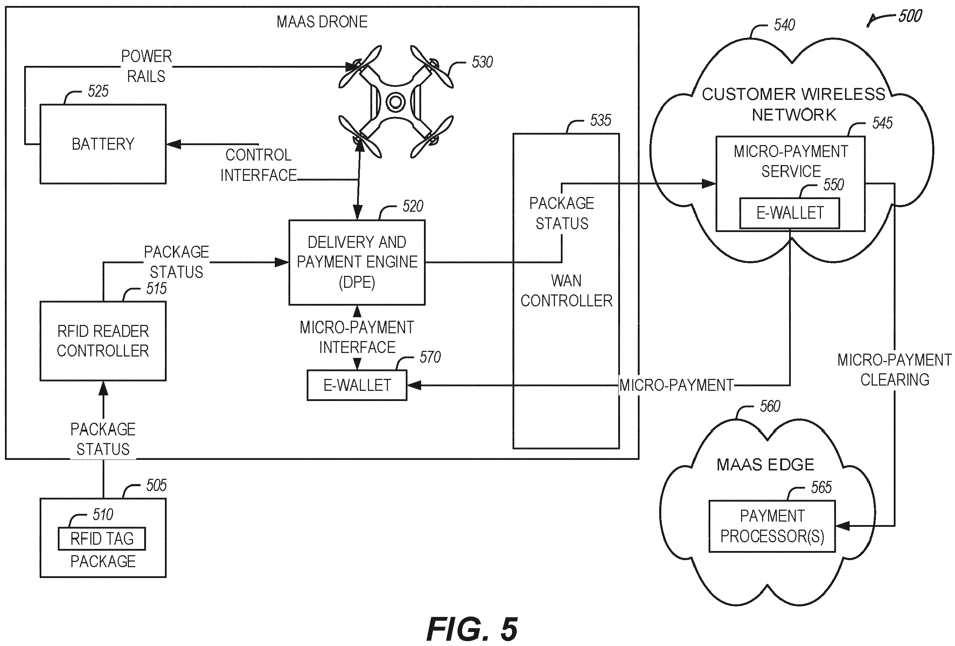

FIG. 5 illustrates an example of a Mobility-as-a-Service drone delivery and payment in a platform 500 for micro payments in a mobility-as-a-service network, according to an embodiment. FIG. 5 may provide features as described in FIGS. 1 to 4.

A MaaS Drone 530 nay be powered by a battery 525 and may contain a delivery and payment engine (DPE) 520 that manages micro-payment for delivery of a package 505. A customer hosts a micro-payment service 545 in the location where the package 505 is delivered that includes an e-wallet 550. The micro-payment service 545 may operate on a customer wireless network 540. When the package 505 is delivered, the micro-payment service 545 releases payment tokens to an e-wallet 570 of the MaaS drone 530. The package 505 may contain a radio-frequency identification (RFID) tag 510 that a RFID reader controller 515 of the MaaS drone 530 uses to provide package status updates throughout the delivery process. The MaaS drone 530 may use its wide-area network (WAN) controller 535 to deliver frequent status updates throughout the delivery period. The DPE 520 may alter flight path, arrival time, power consumption, etc. to satisfy the terms of payment of the customer. The customer wireless network 540 and the WAN controller 535 connections may be used to perform micro-payment clearing in the MaaS Edge 560 infrastructure via payment processors 565.

In both rural and urban communities, automated package delivery is paid for by subscription-based model. However, package delivery drone providers may rely on the subscription provider to determine value for package delivery rather than the end-user. Additionally, the user may desire improved tracking/status updates which is a service the drone provider may offer directly to customer.

The MaaS drone 530 with the RFID reader controller 515 and RFID tag 510 on the package 510 allows for robust package tracking. An induction coil interface may be used in place of RFID for package tracking.

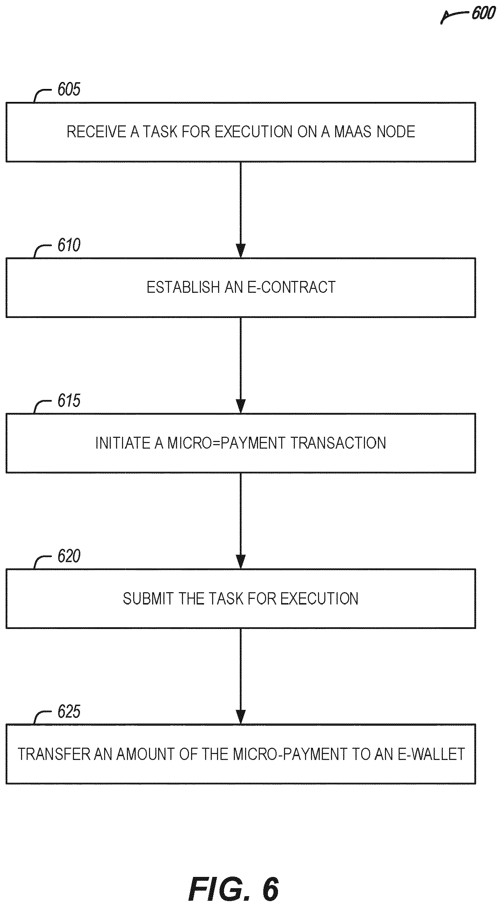

FIG. 6 illustrates a flow diagram of an example of a method 600 for micro payments in a mobility-as-a-service network, according to an embodiment. FIG. 6 may provide features as described in FIGS. 1 to 35.

At operation 605, a task may be received to be executed by a MaaS node (e.g., the MaaS node 200 as described in FIG, 2, etc.) of a MaaS network.

At operation 610, an e-contract may be established with a requestor of the task. In an example, the e-contract may include micro-payment options and the e-wallet of the requestor. In an example, resource utilization and performance metrics may be analyzed to set a target micro-payment rate for resources of the MaaS node. An e-contract proposal may be received from the requestor. It may be calculated that the e-contract terms are insufficient to meet the target micro-payment rate. An e-contract negotiation exchange may be initiated between the MaaS node and the requestor and the e-contract may be established based on the results of the negotiation exchange.

In an example, telemetry data, analytical data, and sensor data may be obtained for execution of the task from the MaaS node 200 and the micro-payment amount may be calculated using the telemetry data, analytical data, and sensor data. In an example, the sensor data may include power consumption data.

At operation 615, a micro-payment transaction may be initiated based on the task and the e-contract. In an example, the task may be a member of a workload and the micro-payment amount may include an amount that corresponds to the resources used to complete the workload by the MaaS node.

At operation 620, the task may be submitted for execution using resources of the MaaS node. In an example, the resource may be a power charging station. In another example, the resource may be a package delivery drone. In an example, available resources of the MaaS node may be calculated. A subset of the available resources dedicated to critical workloads may be determined and the resources of the MaaS node that are available for processing the task may be limited using software-defined hardware.

At operation 625, the micro-payment amount may be transferred from an e-wallet of the requestor to an e-wallet of the MaaS node. In an example, the micro-payment transaction may be submitted for processing by a micro-payment clearing service. In an example, the micro-payment may be facilitated using distributed ledger technology. In another example, the micro-payment may be facilitated using a blockchain.

In an example, a portion of a third-party infrastructure expense may be calculated that is attributable to the task. The micro-payment may be apportioned among the MaaS node and the third-party infrastructure expense and a portion of the micro-payment may be transferred to an e-wallet of an infrastructure provider corresponding to the third-party infrastructure expense.

In an example, an attestation request may be received that corresponds to the task. Attestation evidence may be collected from the resources of the MaaS node and the task may be scheduled for execution using the resources of the MaaS node upon validation of the attestation evidence.

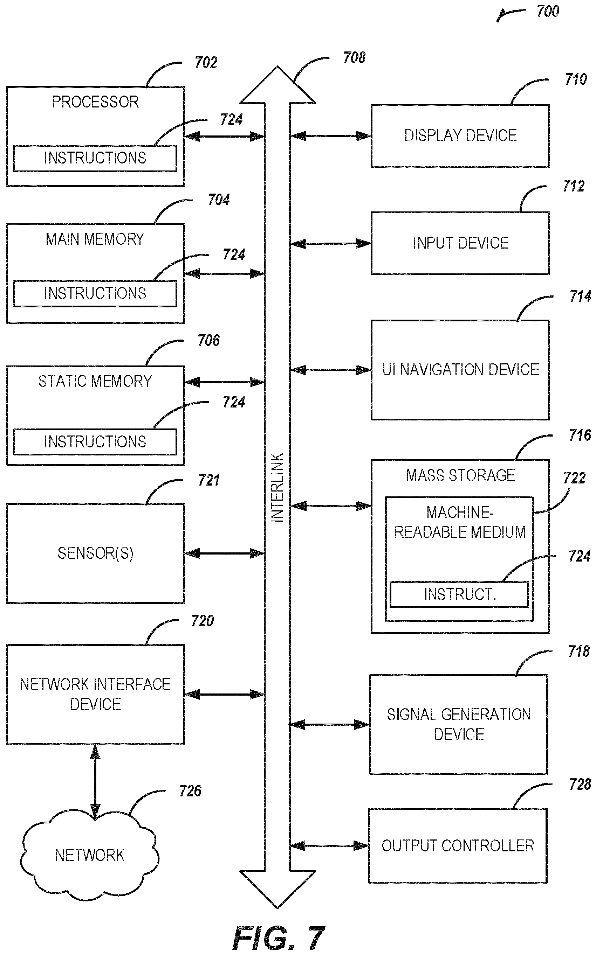

FIG. 7 illustrates a block diagram of an example machine 700 upon which any one or more of the techniques (e.g., methodologies) discussed herein may perform. In alternative embodiments, the machine 700 may operate as a standalone device or may be connected (e.g., networked) to other machines. In a networked deployment, the machine 700 may operate in the capacity of a server machine, a client machine, or both in server-client network environments. In an example, the machine 700 may act as a peer machine in peer-to-peer (P2P) (or other distributed) network environment. The machine 700 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuit sets are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Machine (e.g., computer system) 700 may include a hardware processor 702 (e.g., a central processing unit (CPU), a graphics processing unit (GPU), a hardware processor core, or any combination thereof), a main memory 704 and a static memory 706, some or all of which may communicate with each other via an interlink (e.g., bus) 708. The machine 700 may further include a display unit 710, an alphanumeric input device 712 (e.g., a keyboard), and a user interface (UI) navigation device 714 (e.g., a mouse). In an example, the display unit 710, input device 712 and UI navigation device 714 may be a touch screen display. The machine 700 may additionally include a storage device (e.g., drive unit) 716, a signal generation device 718 (e.g., a speaker), a network interface device 720, and one or more sensors 721, such as a global positioning system (GPS) sensor, compass, accelerometer, or other sensors. The machine 700 may include an output controller 728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 716 may include a machine readable medium 722 on which is stored one or more sets of data structures or instructions 724 (e.g., software) embodying or utilized by any one or more of the techniques or functions described herein. The instructions 724 may also reside, completely or at least partially, within the main memory 704, within static memory 706, or within the hardware processor 702 during execution thereof by the machine 700. In an example, one or any combination of the hardware processor 702, the main memory 704, the static memory 706, or the storage device 716 may constitute machine readable media.

While the machine readable medium 722 is illustrated as a single medium, the term "machine readable medium" may include a single medium or multiple media (e.g., a centralized or distributed database, and/or associated caches and servers) configured to store the one or more instructions 724.

The term "machine readable medium" may include any medium that is capable of storing, encoding, or carrying instructions for execution by the machine 700 and that cause the machine 700 to perform any one or more of the techniques of the present disclosure, or that is capable of storing, encoding or carrying data structures used by or associated with such instructions. Non-limiting machine-readable medium examples may include solid-state memories, and optical and magnetic media. In an example, machine readable media may exclude transitory propagating signals (e.g., non-transitory machine-readable storage media). Specific examples of non-transitory machine-readable storage media may include: nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 724 may further be transmitted or received over a communications network 726 using a transmission medium via the network interface device 720 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, LoRa/LoRaWAN low power wide area network (LPWAN) standards, etc.), IEEE 802.15.4 family of standards, peer-to-peer (P2P) networks, satellite communication networks, 3^{rd} Generation Partnership Project (3GPP) standards for 4G and 5G wireless communication including: 3GPP Long-Term evolution (LTE) family of standards, 3GPP LTE Advanced family of standards, 3GPP LTE Advanced Pro family of standards, 3GPP New Radio (NR) family of standards, among others. In an example, the network interface device 720 may include one or more physical jacks (e.g., Ethernet, coaxial, or phone jacks) or one or more antennas to connect to the communications network 726. In an example, the network interface device 720 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 700, and includes digital or analog communications signals or other intangible medium to facilitate communication of such software.

### Additional Notes & Examples

Example 1 is a system for payment processing in a mobility-as-a-service (MaaS) network comprising: at least one processor; and memory including instructions that, when executed by the at least one processor, cause the at least one processor to perform operations to: receive a mobility task for execution by a MaaS node of the MaaS network; establish an electronic contract with a requestor of the mobility task; initiate a payment transaction based on the mobility task and the electronic contract; submit the mobility task for execution by the MaaS node using resources of the MaaS node; and transfer an amount of the payment from an electronic account of the requestor to an electronic account of the MaaS node.

In Example 2, the subject matter of Example 1 wherein, the mobility task is a member of a workload and the payment amount includes an amount that corresponds to the resources used to complete the workload by the MaaS node.

In Example 3, the subject matter of Examples 1-2 wherein, the electronic contract includes payment options and the electronic account of the requestor.

In Example 4, the subject matter of Examples 1-3 wherein, the payment transaction is submitted for processing by a payment clearing service.

In Example 5, the subject matter of Examples 1-4 includes, the memory further comprising instructions that, when executed by the at least one processor, cause the at least one processor to perform operations to: obtain telemetry data, analytical data, and sensor data for execution of the mobility task from the MaaS node; and calculate the payment amount using the telemetry data, analytical data, and sensor data.

In Example 6, the subject matter of Example 5 wherein, the sensor data includes power consumption data.

In Example 7, the subject matter of Examples 1-6 includes, the memory further comprising instructions that, when executed by the at least one processor, cause the at least one processor to perform operations to: calculate a portion of a third-party infrastructure expense attributable to the mobility task; apportion the payment among the MaaS node and the third-party infrastructure expense; and transmit a portion of the payment to an electronic account of an infrastructure provider corresponding to the third-party infrastructure expense.

In Example 8, the subject matter of Examples 1-7 includes, the memory further comprising instructions that, when executed by the at least one processor, cause the at least one processor to perform operations to: calculate available resources of the MaaS node; determine a subset of the available resources dedicated to critical workloads; and limit the resources of the MaaS node that are available for processing the mobility task using software-defined hardware.

In Example 9, the subject matter of Examples 1-8 includes, the memory further comprising instructions that, when executed by the at least one processor, cause the at least one processor to perform operations to: analyze resource utilization and performance metrics to set a target payment rate for resources of the MaaS node; receive an electronic contract proposal from the requestor; calculate that terms of the electronic contract proposal are insufficient to meet the target payment rate; initiate an electronic contract negotiation exchange between the MaaS node and the requestor; and establish the electronic contract based on results of the negotiation exchange.

In Example 10, the subject matter of Examples 1-9 includes, the memory further comprising instructions that, when executed by the at least one processor, cause the at least one processor to perform operations to: receive an attestation request corresponding to the mobility task; collect attestation evidence from the resources of the MaaS node; and schedule the mobility task for execution using the resources of the MaaS node upon validation of the attestation evidence.

In Example 11, the subject matter of Examples 1-10 wherein, the payment is facilitated using distributed ledger technology.

In Example 12, the subject matter of Examples 1-11 wherein, the payment is facilitated using a blockchain.

In Example 13, the subject matter of Examples 1-12 wherein, the resource is a power charging station.

In Example 14, the subject matter of Examples 1-13 wherein, the resource is a package delivery drone.

In Example 15, the subject matter of Examples 1-14 wherein, the MaaS network includes a set of MaaS nodes including the MaaS node, and wherein the set of MaaS nodes are distributed among a set of vehicles operating in a geographic area.

In Example 16, the subject matter of Examples 1-15 wherein, the MaaS node is mobile computing apparatus corresponding to a vehicle.

Example 17 is at least one non-transitory machine-readable medium including instructions for payment processing in a mobility-as-a-service (MaaS) network that, when executed by at least one processor, cause the at least one processor to perform operations to: receive a mobility task for execution by a MaaS node of the MaaS network; establish an electronic contract with a requestor of the mobility task; initiate a payment transaction based on the mobility task and the electronic contract; submit the mobility task for execution by the MaaS node using resources of the MaaS node; and transfer an amount of the payment from an electronic account of the requestor to an electronic account of the MaaS node.

In Example 18, the subject matter of Example 17 wherein, the mobility task is a member of a workload and the payment amount includes an amount that corresponds to the resources used to complete the workload by the MaaS node.

In Example 19, the subject matter of Examples 17-18 wherein, the electronic contract includes payment options and the electronic account of the requestor.

In Example 20, the subject matter of Examples 17-19 wherein, the payment transaction is submitted for processing by a payment clearing service.

In Example 21, the subject matter of Examples 17-20 includes, instructions that, when executed by the at least one processor, cause the at least one processor to perform operations to: obtain telemetry data, analytical data, and sensor data for execution of the mobility task from the MaaS node; and calculate the payment amount using the telemetry data, analytical data, and sensor data.

In Example 22, the subject matter of Example 21 wherein, the sensor data includes power consumption data.

In Example 23, the subject matter of Examples 17-22 includes, instructions that, when executed by the at least one processor, cause the at least one processor to perform operations to: calculate a portion of a third-party infrastructure expense attributable to the mobility task; apportion the payment among the MaaS node and the third-party infrastructure expense; and transmit a portion of the payment to an electronic account of an infrastructure provider corresponding to the third-party infrastructure expense.

In Example 24, the subject matter of Examples 17-23 includes, instructions that, when executed by the at least one processor, cause the at least one processor to perform operations to: calculate available resources of the MaaS node; determine a subset of the available resources dedicated to critical workloads; and limit the resources of the MaaS node that are available for processing the mobility task using software-defined hardware.

In Example 25, the subject matter of Examples 17-24 includes, instructions that, when executed by the at least one processor, cause the at least one processor to perform operations to: analyze resource utilization and performance metrics to set a target payment rate for resources of the MaaS node; receive an electronic contract proposal from the requestor; calculate that terms of the electronic contract proposal are insufficient to meet the target payment rate; initiate an electronic contract negotiation exchange between the MaaS node and the requestor; and establish the electronic contract based on results of the negotiation exchange.

In Example 26, the subject matter of Examples 17-25 includes, instructions that, when executed by the at least one processor, cause the at least one processor to perform operations to: receive an attestation request corresponding to the mobility task; collect attestation evidence from the resources of the MaaS node; and schedule the mobility task for execution using the resources of the MaaS node upon validation of the attestation evidence.

In Example 27, the subject matter of Examples 17-26 wherein, the payment is facilitated using distributed ledger technology.

In Example 28, the subject matter of Examples 17-27 wherein, the payment is facilitated using a blockchain.

In Example 29, the subject matter of Examples 17-28 wherein, the resource is a power charging station.

In Example 30, the subject matter of Examples 17-29 wherein, the resource is a package delivery drone.

In Example 31, the subject matter of Examples 17-30 wherein, the MaaS network includes a set of MaaS nodes including the MaaS node, and wherein the set of MaaS nodes are distributed among a set of vehicles operating in a geographic area.

In Example 32, the subject matter of Examples 17-31 wherein, the MaaS node is mobile computing apparatus corresponding to a vehicle.

Example 33 is a method for payment processing in a mobility-as-a-service (MaaS) network comprising: receiving a mobility task for execution by a MaaS node of the MaaS network; establishing an electronic contract with a requestor of the mobility task; initiating a payment transaction based on the mobility task and the electronic contract; submitting the mobility task for execution by the MaaS node using resources of the MaaS node; and transferring an amount of the payment from an electronic account of the requestor to an electronic account of the MaaS node.

In Example 34, the subject matter of Example 33 wherein, the mobility task is a member of a workload and the payment amount includes an amount that corresponds to the resources used to complete the workload by the MaaS node.

In Example 35, the subject matter of Examples 33-34 wherein, the electronic contract includes payment options and the electronic account of the requestor.

In Example 36, the subject matter of Examples 33-35 wherein, the payment transaction is submitted for processing by a payment clearing service.

In Example 37, the subject matter of Examples 33-36 includes, obtaining telemetry data, analytical data, and sensor data for execution of the mobility task from the MaaS node; and calculating the payment amount using the telemetry data, analytical data, and sensor data.

In Example 38, the subject matter of Example 37 wherein, the sensor data includes power consumption data.

In Example 39, the subject matter of Examples 33-38 includes, calculating a portion of a third-party infrastructure expense attributable to the mobility task; apportioning the payment among the MaaS node and the third-party infrastructure expense; and transmitting a portion of the payment to an electronic account of an infrastructure provider corresponding to the third-party infrastructure expense.

In Example 40, the subject matter of Examples 33-39 includes, calculating available resources of the MaaS node; determining a subset of the available resources dedicated to critical workloads; and limiting the resources of the MaaS node that are available for processing the mobility task using software-defined hardware.

In Example 41, the subject matter of Examples 33-40 includes, analyzing resource utilization and performance metrics to set a target payment rate for resources of the MaaS node; receiving an electronic contract proposal from the requestor; calculating that terms of the electronic contract proposal are insufficient to meet the target payment rate; initiating an electronic contract negotiation exchange between the MaaS node and the requestor; and establishing the electronic contract based on results of the negotiation exchange.

In Example 42, the subject matter of Examples 33-41 includes, receiving an attestation request corresponding to the mobility task; collecting attestation evidence from the resources of the MaaS node; and scheduling the mobility task for execution using the resources of the MaaS node upon validation of the attestation evidence.

In Example 43, the subject matter of Examples 33-42 wherein, the payment is facilitated using distributed ledger technology.

In Example 44, the subject matter of Examples 33-43 wherein, the payment is facilitated using a blockchain.

In Example 45, the subject matter of Examples 33-44 wherein, the resource is a power charging station.

In Example 46, the subject matter of Examples 33-45 wherein, the resource is a package delivery drone.

In Example 47, the subject matter of Examples 33-46 wherein, the MaaS network includes a set of MaaS nodes including the MaaS node, and wherein the set of MaaS nodes are distributed among a set of vehicles operating in a geographic area.

In Example 48, the subject matter of Examples 33-47 wherein, the MaaS node is mobile computing apparatus corresponding to a vehicle.

Example 49 is at least one machine-readable medium including instructions that, when executed by a machine, cause the machine to perform any method of Examples 33-48.

Example 50 is a system comprising means to perform any method of Examples 33-48.

Example 51 is a system for payment processing in a mobility-as-a-service (MaaS) network comprising: means for receiving a mobility task for execution by a MaaS node of the MaaS network; means for establishing an electronic contract with a requestor of the mobility task; means for initiating a payment transaction based on the mobility task and the electronic contract; means for submitting the mobility task for execution by the MaaS node using resources of the MaaS node; and means for transferring an amount of the payment from an electronic account of the requestor to an electronic account of the MaaS node.

In Example 52, the subject matter of Example 51 wherein, the mobility task is a member of a workload and the payment amount includes an amount that corresponds to the resources used to complete the workload by the MaaS node.

In Example 53, the subject matter of Examples 51-52 wherein, the electronic contract includes payment options and the electronic account of the requestor.

In Example 54, the subject matter of Examples 51-53 wherein, the payment transaction is submitted for processing by a payment clearing service.

In Example 55, the subject matter of Examples 51-54 includes, means for obtaining telemetry data, analytical data, and sensor data for execution of the mobility task from the MaaS node; and means for calculating the payment amount using the telemetry data, analytical data, and sensor data.

In Example 56, the subject matter of Example 55 wherein, the sensor data includes power consumption data.

In Example 57, the subject matter of Examples 51-56 includes, means for calculating a portion of a third-party infrastructure expense attributable to the mobility task; means for apportioning the payment among the MaaS node and the third-party infrastructure expense; and means for transmitting a portion of the payment to an electronic account of an infrastructure provider corresponding to the third-party infrastructure expense.

In Example 58, the subject matter of Examples 51-57 includes, means for calculating available resources of the MaaS node; means for determining a subset of the available resources dedicated to critical workloads; and means for limiting the resources of the MaaS node that are available for processing the mobility task using software-defined hardware.

In Example 59, the subject matter of Examples 51-58 includes, means for analyzing resource utilization and performance metrics to set a target payment rate for resources of the MaaS node; means for receiving an electronic contract proposal from the requestor; means for calculating that terms of the electronic contract proposal are insufficient to meet the target payment rate; means for initiating an electronic contract negotiation exchange between the MaaS node and the requestor; and means for establishing the electronic contract based on results of the negotiation exchange.

In Example 60, the subject matter of Examples 51-59 includes, means for receiving an attestation request corresponding to the mobility task; means for collecting attestation evidence from the resources of the MaaS node; and means for scheduling the mobility task for execution using the resources of the MaaS node upon validation of the attestation evidence.

In Example 61, the subject matter of Examples 51-60 wherein, the payment is facilitated using distributed ledger technology.

In Example 62, the subject matter of Examples 51-61 wherein, the payment is facilitated using a blockchain.

In Example 63, the subject matter of Examples 51-62 wherein, the resource is a power charging station.

In Example 64, the subject matter of Examples 51-63 wherein, the resource is a package delivery drone.

In Example 65, the subject matter of Examples 51-64 wherein, the MaaS network includes a set of MaaS nodes including the MaaS node, and wherein the set of MaaS nodes are distributed among a set of vehicles operating in a geographic area.

In Example 66, the subject matter of Examples 51-65 wherein, the MaaS node is mobile computing apparatus corresponding to a vehicle.

Example 67 is at least one machine-readable medium including instructions that, when executed by processing circuitry, cause the processing circuitry to perform operations to implement of any of Examples 1-66.

Example 68 is an apparatus comprising means to implement of any of Examples 1-66.

Example 69 is a system to implement of any of Examples 1-66.

Example 70 is a method to implement of any of Examples 1-66.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

## Claims

1. A method for payment processing in a mobility-as-a-service (MaaS) network comprising:
receiving a mobility task for execution by a MaaS node of the MaaS network;
establishing an electronic contract with a requestor of the mobility task;
initiating a payment transaction based on the mobility task and the electronic contract;
submitting the mobility task for execution by the MaaS node using resources of the MaaS node; and
transferring an amount of the payment from an electronic account of the requestor to an electronic account of the MaaS node.

2. The method of claim 1, wherein the mobility task is a member of a workload and the payment amount includes an amount that corresponds to the resources used to complete the workload by the MaaS node.

3. The method of claim 1, wherein the electronic contract includes payment options and the electronic account of the requestor.

4. The method of claim 1, wherein the payment transaction is submitted for processing by a payment clearing service.

5. The method of claim 1, further comprising:
obtaining telemetry data, analytical data, and sensor data for execution of the mobility task from the MaaS node; and
calculating the payment amount using the telemetry data, analytical data, and sensor data.

6. The method of claim 5, wherein the sensor data includes power consumption data.

7. The method of claim 1, further comprising:
calculating a portion of a third-party infrastructure expense attributable to the mobility task;
apportioning the payment among the MaaS node and the third-party infrastructure expense; and
transmitting a portion of the payment to an electronic account of an infrastructure provider corresponding to the third-party infrastructure expense.

8. The method of claim 1, further comprising:
calculating available resources of the MaaS node;
determining a subset of the available resources dedicated to critical workloads; and
limiting the resources of the MaaS node that are available for processing the mobility task using software-defined hardware.

9. The method of claim 1, further comprising:
analyzing resource utilization and performance metrics to set a target payment rate for resources of the MaaS node;
receiving an electronic contract proposal from the requestor;
calculating that terms of the electronic contract proposal are insufficient to meet the target payment rate;
initiating an electronic contract negotiation exchange between the MaaS node and the requestor; and
establishing the electronic contract based on results of the negotiation exchange.

10. The method of claim 1, further comprising:
receiving an attestation request corresponding to the mobility task;
collecting attestation evidence from the resources of the MaaS node; and
scheduling the mobility task for execution using the resources of the MaaS node upon validation of the attestation evidence.

11. The method of claim 1, wherein the resource is a power charging station.

12. The method of claim 1, wherein the resource is a package delivery drone.

13. The method of claim 1, wherein the MaaS network includes a set of MaaS nodes including the MaaS node, and wherein the set of MaaS nodes are distributed among a set of vehicles operating in a geographic area.

14. At least one machine-readable medium including instructions that, when executed by a machine, cause the machine to perform any method of claims 1-13.

15. A system comprising means to perform any method of claims 1-13.
